# EUROPEAN PATENT APPLICATION

(11) **EP 1 136 920 A2**
(43) Date of publication of application: **26.09.2001**
(21) Application number: 01102840.4
(22) Date of filing: 13.02.2001
(51) Int. Cl.: G06F 17/50

(54) **Electric characteristic evaluating apparatus for a semiconductor device**

(30) Priority: 24.03.2000 JP 2000085050
(71) Applicant: KABUSHIKI KAISHA TOSHIBA, Kawasaki-shi, Kanagawa-ken 210-8572 (JP)
(72) Inventor: Tanimoto, Hiroyoshi, Intellectual Prop. Division, Tokyo (JP)
(74) Representative: HOFFMANN - EITLE

(57) **Abstract**

The present invention quantitatively estimates how much of each carrier generation and extinction mechanism is contributed to the leak current by a single simulation. Thus, according to the present invention, the time required for evaluating the electric characteristics can be substantially curtailed, and the term and expenses of manufacturing a semiconductor device can be curtailed.

## Description

### CROSS REFERENCE TO RELATED APPLICATIONS

The subject application is related to subject matter disclosed in the Japanese Patent Application Tokugan2000-85050 filed March 24, 2000 in Japan, to which the subject application claims priority under the Paris Convention and which is incorporated by reference herein.

### BACKGROUND OF THE INVENTION

### 1. Field of the Invention

The present invention relates to electric characteristic evaluating apparatus, electric characteristic evaluating method and electric characteristic evaluating program for extracting electric characteristics of a semiconductor device by numerically solving physical equations describing the physical phenomenon in the semiconductor device, and also a semiconductor device manufacturing method for determining manufacturing conditions of semiconductor device from the extracted electric characteristics and manufacturing a semiconductor device on the basis of the determined manufacturing conditions, and more particularly to a technology of curtailing the term and expenses of semiconductor manufacturing process by identifying the generation and extinction mechanism of the carrier for determining the leak current in the semiconductor device by a single calculation, and shortening the time required for evaluation of electric characteristics.

### 2. Description of the Related Art

Leak current is known as one of the electric characteristics that determine the performance of a semiconductor device, and, for example, the pause characteristic of DRAM and power consumption of SRAM are determined by the leak current of the semiconductor device which composes a memory cell. Generally, the bias condition of semiconductor device depends on the specification of the semiconductor device, and it is hard to set freely, but since the distribution of impurity concentration or device shape can be controlled by the manufacturing method and manufacturing conditions of the semiconductor device, the leak current can be controlled by optimizing the distribution of impurity concentration or device shape.

In such background, recently, by numerically solving the physical equations described in nonlinear differential equations such as Poisson's equation or current continuous formula in consideration of distribution of impurity concentration of semiconductor device or device shape, it has been attempted to evaluate the leak current by using a device simulator (= electric characteristic evaluating apparatus) for extracting and evaluating the electric characteristics of semiconductor device. When evaluating the leak current by using the device simulator, the generation and extinction mechanism of the carrier which is the source of leak current must be taken into consideration, and principal mechanisms include SRH (Shockley-Read-Hall) process, impact ionization, and inter-band tunneling. Therefore, by using the device simulator, the generation and extinction mechanism as the principal cause of leak current can be recognized, and therefore by identifying the principal cause of leak current, proper measures for reducing the leak current can be taken before manufacturing the semiconductor device.

However, the evaluation process of leak current using such conventional device simulation technology involves the following technical problems to be solved.

That is, in the conventional process, in order to identify what is the generation and extinction mechanism to reign the leak current, it requires plural times of execution of device simulation, and, for example, when evaluating the leak current in consideration of three mechanisms of carrier generation and extinction, that is, SRH process, impact ionization, and inter-band tunneling, device simulation must be executed three times in order to calculate the leak current due to SRH process only, leak current due to impact ionization only, and leak current due to inter-band tunneling only, and it needs further execution of multiple times of device simulation if considering also other leak current mechanism, such as generation and extinction mechanism of carrier at the interface of semiconductor and insulator.

Yet, generally, if attempted to optimize the impurity concentration and device shape in order to reduce the leak current by making use of device simulation technology, the device simulation must be executed plural times, and in such situation, further, if desired to evaluate by separating the contribution of leak current about generation and extinction mechanism of each carrier, it needs three times of execution of. device simulation.

Thus, the evaluation of leak current by using the existing device simulation technology requires numeral repetitions of execution of device simulation until the desired information is extracted, and it takes too much time in evaluation of electric characteristics, and it was hence difficult to curtail the term and expenses of manufacturing process of semiconductor device.

### SUMMARY OF THE INVENTION

The invention is devised in the light of such technical problems, and it is hence an object thereof to curtail significantly the term and expenses of manufacturing process of semiconductor device.

To solve the technical problems, the present inventor integrated the carrier generation and extinction speed obtained by numerically solving physical equations, in each carrier generation and extinction mechanism within the semiconductor region, estimated quantitatively how much is contributed to the leak current by each carrier generation and extinction mechanism by a single simulation for output of integral value, and learned that the time required for evaluation of electric characteristic can be substantially curtailed, so that the term and expenses of manufacturing process of semiconductor device can be curtail, and thereby continued intensive studies and finally reached the technical concept having the following features.

The first feature of the present invention is an electric characteristic evaluating apparatus for extracting electric characteristics of a semiconductor device by numerically solving physical equations describing physical phenomenon in a semiconductor device, which comprises an integral value calculator for integrating the carrier generation and extinction speed obtained by numerically solving the physical equations, in each carrier generation and extinction mechanism within the semiconductor region, and issuing the result obtained by integration.

Hence, the time required for evaluation of electric characteristics can be shortened, and the term and expenses of manufacturing process of semiconductor can be substantially curtailed.

The second feature of the present invention is an electric characteristic evaluating method for extracting electric characteristics of a semiconductor device by numerically solving physical equations describing physical phenomenon in a semiconductor device, which comprises an integral value calculating step of integrating the carrier generation and extinction speed obtained by numerically solving the physical equations, in each carrier generation and extinction mechanism within the semiconductor region, and issuing the result obtained by integration.

Hence, the time required for evaluation of electric characteristics can be shortened, and the term and expenses of manufacturing process of semiconductor can be substantially curtailed.

The third feature of the present invention is an electric characteristic evaluating program for extracting electric characteristics of a semiconductor device by numerically solving physical equations describing physical phenomenon in a semiconductor device, which comprises an integral value calculating process of integrating the carrier generation and extinction speed obtained by numerically solving the physical equations, in each carrier generation and extinction mechanism within the semiconductor region, and issuing the result obtained by integration, and makes a computer execute this process.

Hence, the time required for evaluation of electric characteristics can be shortened, and the term and expenses of manufacturing process of semiconductor can be substantially curtailed.

The fourth feature of the present invention is a semiconductor device manufacturing method for extracting electric characteristics of a semiconductor device by numerically solving physical equations describing physical phenomenon in a semiconductor device, determining the manufacturing conditions of semiconductor device from the extracted electric characteristics, and manufacturing the semiconductor device on the basis of the determined manufacturing conditions, which comprises an integral value calculating step of integrating the carrier generation and extinction speed obtained by numerically solving the physical equations, in each carrier generation and extinction mechanism within the semiconductor region, and issuing the result obtained by integration, and a step of determining the manufacturing conditions of the semiconductor device having the desired electric characteristics on the basis of the output of the integral value.

Hence, the time required for evaluation of electric characteristics can be shortened, and the term and expenses of manufacturing process of semiconductor can be substantially curtailed.

Other and further objects and features of the present invention will become obvious upon understanding of the illustrative embodiments about to be described in connection with the accompanying drawings or will be indicated in the appended claims, and various advantages not referred to herein will occur to one skilled in the art upon employing of the invention in practice.

### BRIEF DESCRIPTION OF DRAWINGS

FIG. 1 is a block diagram showing a configuration of semiconductor device manufacturing system according to an embodiment of the present invention.

FIG. 2 is a flowchart showing a semiconductor device manufacturing method according to an embodiment of the present invention.

FIG. 3 is an outline view showing a configuration of an electric characteristic evaluating apparatus according to an embodiment of the present invention.

FIG. 4 is a diagram showing design information of a semiconductor device.

FIG. 5A,5B are the diagram showing result of experiment by using electric characteristic evaluating methods of prior art and the present invention.

FIG. 6A,6B are the diagram showing result of experiment by using electric characteristic evaluating methods of prior art and the present invention.

FIG. 7A∼7H are the equation which is used in a semiconductor device manufacturing method according to an embodiment of the present invention.

### DETAILED DESCRIPTION OF THE PREFERRED EMBODIMENTS

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified. (Electric characteristic evaluating apparatus)

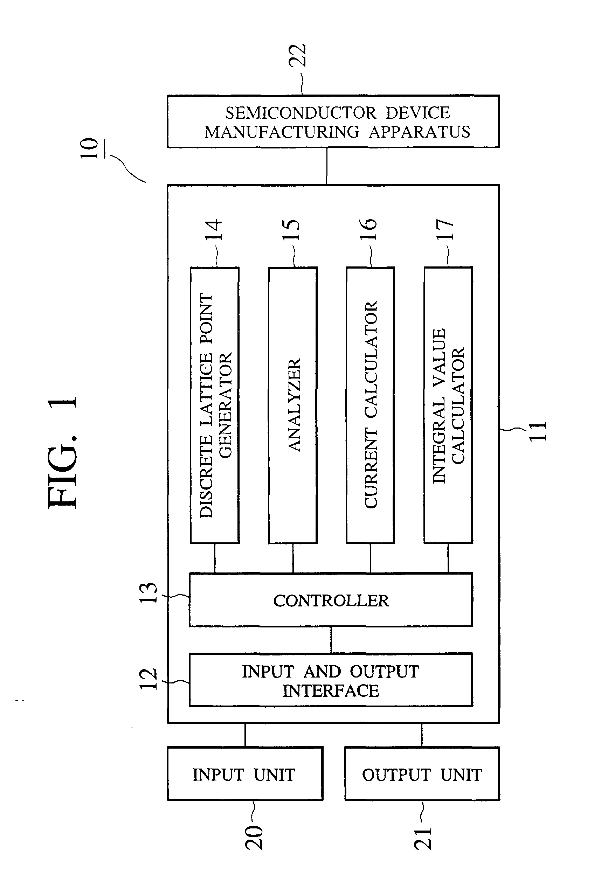

Fig. 1 is a block diagram showing a configuration of semiconductor device manufacturing system according to an embodiment of the present invention.

An electric characteristic evaluating apparatus 11 of the present invention is connected to a semiconductor device manufacturing apparatus 22 for manufacturing a semiconductor device by using the information relating to the manufacturing condition extracted from the apparatus 11, and a semiconductor device manufacturing system 10 is built up, and this apparatus 11 comprises an input and output interface 12 for playing the role of interface of input and output processing of information from outside, a controller 13 for controlling the electric characteristic evaluating process of semiconductor device, a discrete lattice point generator 14 for generating discrete lattice points for evaluating the electric characteristics within the structure of the entered semiconductor device, an analyzer 15 for numerically analyzing the physical equations about the physical quantity of the discrete lattice point, a current calculator 16 for calculating the current value of each electrode by using the physical quantity on the discrete lattice point, and an integrator 17 for integrating the carrier generation and extinction speed by each carrier generation and extinction mechanism.

The electric characteristic evaluating apparatus 11 is connected to an input unit 20 for entering various information such as electric characteristic evaluation information and control information relating to the apparatus 11, and an output unit 21 for issuing various information such as calculation result of the apparatus 11 and error information. The input unit 20 is realized by keyboard, mouse pointer, light pen, and others, and the output unit 21 is realized by printer, display, etc.

The input and output interface 12 is preferred to be a graphical user interface allowing the user to process while referring to display information. (Electric characteristic evaluating method, semiconductor device manufacturing method)

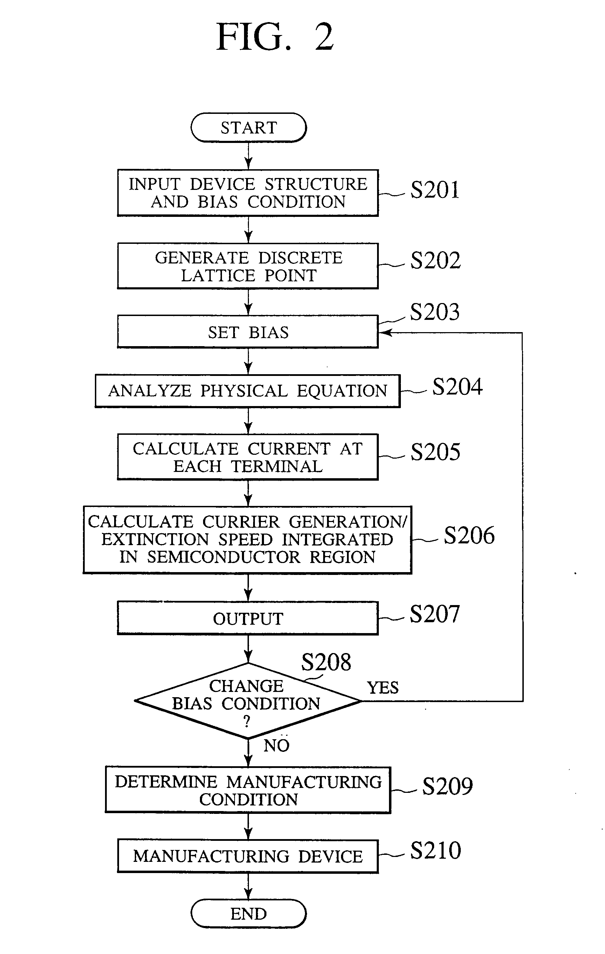

Fig. 2 is a flowchart showing a semiconductor device manufacturing method according to an embodiment of the present invention.

The semiconductor device manufacturing method according to an embodiment of the present invention is executed in the following steps.
(1) To enter impurity concentration distribution of semiconductor device of which electric characteristics are to be evaluated, its device shape, and bias conditions (= electric characteristic evaluation information) (device structure, bias condition input step S201).

Herein, the impurity concentration distribution and device shape of semiconductor device may be entered either by using light pen or other input device, or by using the device structure information obtained by process simulation. As the bias condition, for example, in the case of N type MOSFET, supposing the potential of the source electrode and substrate electrode to be the ground, that is, 0 [V], the voltage to be applied to each electrode may be specified so as to apply 2 [V] to the drain electrode and 2 [V] to the gate electrode, or by grounding the potential of the source electrode and substrate electrode, the changing range and changing amount of the voltage applied to at least one electrode may be specified so as to apply 2 [V] to the drain electrode, and change the voltage applied to the gate electrode in a range from 0 [V] to 2 [V] at 0.1 [V] increments.
(2) The discrete lattice point generator 14 generates a discrete lattice point necessary for solving the physical equation in the entered device shape (discrete lattice point generating step S202).
(3) The controller 13 sets the bias condition of voltage and others to be applied to each electrode in the semiconductor device according to the entered bias conditions (bias setting step S203).
(4) The analyzer 15 numerically solves the physical equation about physical quantities such as the potential on the discrete lattice point and electron concentration, in the boundary condition given as bias condition (physical equation analysis step S204). Herein, the analyzer 15 processes same as the conventional device simulator, by linearizing the physical equation by a very small changing amount, and solving the nonlinear simultaneous equations by using the iteration method.
(5) The current calculator 16 calculates the current value of each electrode by using physical quantities such as the potential on the discrete lattice point and electron concentration (current calculating step S205).
(6) The integrator 17 integrates by volume the carrier generation and extinction speed due to each carrier generation and extinction mechanism in the semiconductor region (volume integral value calculating step S206).

The volume integral value calculating step is described below.

In the electric characteristic evaluating method of the embodiment of the present invention, different from the prior art, the solving step of physical equation in the given bias condition is followed by a step of volume integration of carrier generation and extinction speed due to each carrier generation and extinction mechanism in the semiconductor region, and by this process, the leak current component due to each carrier generation and extinction mechanism can be evaluated separately.

Specifically, the volume integral value is extracted in the following steps.

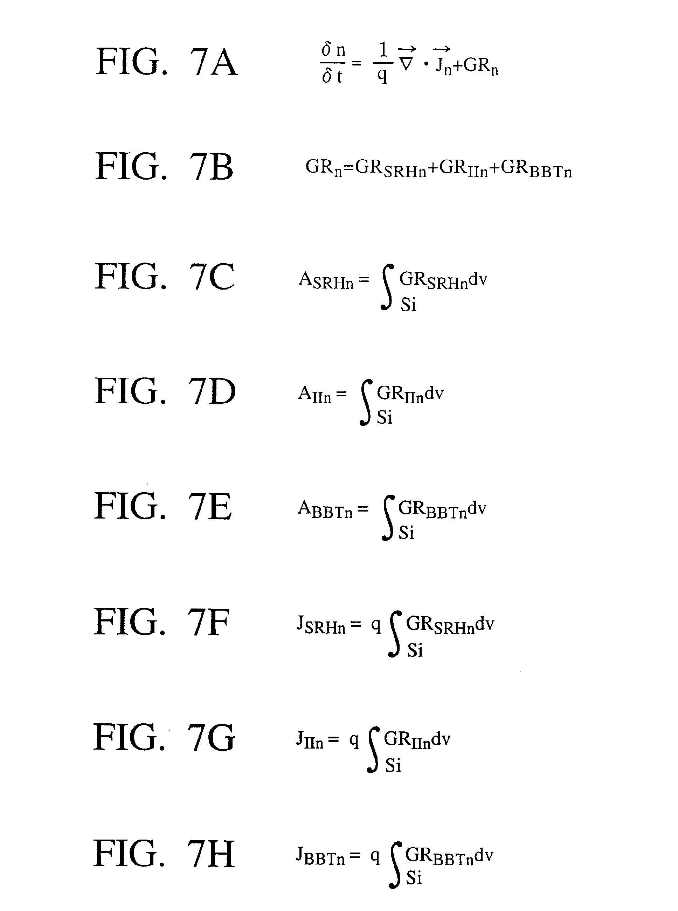

Generally, in the device simulation, the current preservation formula as shown in Fig. 7A is solved. Herein, n, t, q, Jn, and GRn respectively denote the electron concentration, time, prime charge, electron current density vector, and electron generation and extinction speed, and the polarity sign of electron generation and extinction speed GRn is positive in carrier generation, and negative in extinction. A similar current preservation formula exists for holes, but description is omitted herein.

The leak current of semiconductor device is originated in the term of generation and extinction speed GRn at the right side of Fig. 7A, and the generation and extinction speed GRn can be expressed by the sum of generation and extinction speeds due to plural generation and extinction mechanisms as shown in Fig. 7B. Herein, GRSRHn is the electron generation and extinction speed due to SRH process, GRIIn is the electron generation and extinction speed due to impact ionization, and GRBBTn is the electron generation and extinction speed due to inter-band tunneling. Only three types of generation and extinction mechanism are assumed herein, but this is only an example, and other generation and extinction mechanisms are also taken into consideration.

Each generation and extinction speed at the right side in Fig. 7B is expressed by the function of electron concentration or the like, and is taken into the device simulator, and by numerically solving the physical equations, the generation and extinction speed on the discrete lattice point is extracted in each generation and extinction mechanism.

It is a feature of the electric characteristic evaluating process of the invention that the generation and extinction speed thus extracted is integrated by volume in the semiconductor in every generation and extinction mechanism, and issued, and this process is expressed in formulas as shown in Fig. 7C to 7E. The volume integral value may be issued directly, but may be also issued as the product of each value multiplied by prime charge q. That is, the values in the formulas shown in Fig. 7F to 7H may be calculated and issued, and in this case the output values are approximate values of the leak current components given by each generation and extinction mechanism. Herein, the reason why approximate values of leak current components are given by each generation and extinction mechanism in Fig. 7F to 7H is, physically explaining, the carrier extinction speed in the semiconductor device in a state where leak current is a problem is greater than the carrier generation speed, and therefore the carrier generated by the carrier generation mechanism almost completely flows into the electrode without rebonding, so as to be observed as leak current.

When the carrier generation and extinction speed is in the dimension of length⁻³ time⁻¹, the volume integral value is calculated as described above, but in the case of the carrier generation and extinction mechanism of which speed is in the dimension of length⁻² time⁻¹, such as the carrier generation and extinction mechanism due to SRH process at the interface of semiconductor and insulator, the volume integrated value by the semiconductor is not calculated and issued, but the surface integrated value by the interface is calculated and issued, and similarly in the case of the carrier generation and extinction mechanism having the dimension of length⁻¹ time⁻¹, the line integrated value is calculated and issued. In the case of carrier generation and extinction mechanism having other dimension, evidently, similar processing is required, but its explanation is omitted.

In the embodiment, meanwhile, after calculating the current value in each electrode, the volume integral value is extracted, but it is the same if the steps are in reverse sequence.
(7) The controller 13 issues the current value and volume integral value to the output unit 21 (output processing step S207).
(8) The controller 13 judges whether or not to evaluated by other bias condition (judging step S208), and when judging by other bias condition as a result of judging, the process goes to bias setting step 203, and if not evaluating, the process goes to manufacturing condition determining step S209.
(9) On the basis of output of the electric characteristic of the semiconductor device, the manufacturing conditions such as the impurity ion implantation condition and annealing condition for manufacturing the semiconductor device having desired electric characteristics are determined (manufacturing condition determining step S209).
(10) The semiconductor device manufacturing device 22 executes the semiconductor manufacturing process such as impurity ion implanting process and annealing process on the basis of the determined manufacturing parameters, and manufactures a semiconductor device (semiconductor device manufacturing step S210).

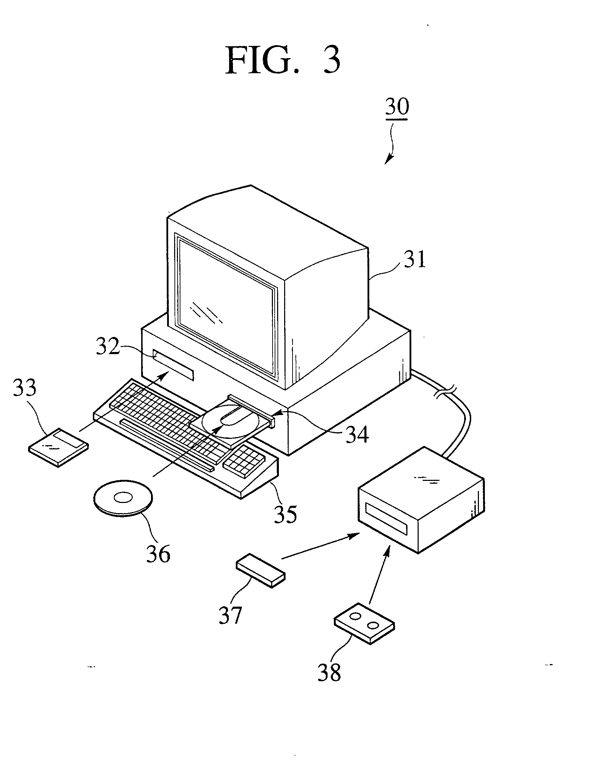

The electric characteristic evaluating apparatus according to the embodiment of the present invention has an appearance, for example, as shown in Fig. 3. That is, the electric characteristic evaluating apparatus according to the embodiment of the present invention is composed by incorporating components of the electric characteristic evaluating apparatus 11 in a computer system 30. The computer system 30 comprises a floppy disk drive 32, and an optical disk driver 34. A floppy disk 33 is inserted into the floppy disk drive 32, and an optical disk 36 is inserted into the optical disk driver 34, and by specified reading operation, the electric characteristic evaluating programs stored in these recording media can be installed in the system. Further, by connecting a specified drive device, for example, by using a ROM 37 playing the role of memory device and a cartridge 38 playing the role of magnetic tape device, it is possible to execute installation or reading or writing of data. Moreover, the user can enter various data relating to the electric characteristic evaluating process by means of keyboard 35, and know the results of calculation of electric characteristics through the display 31.

The electric characteristic evaluating method according to the embodiment of the present invention may be programmed and saved in a computer-readable recording medium. When evaluating the electric characteristic, this recording medium is read into the computer system, and the program is stored in the memory of the computer system, and by executing the electric characteristic evaluating program by the operation unit, the electric characteristic evaluating method of the invention can be realized. The recording medium to be used herein includes, for example, semiconductor memory, magnetic disk, optical disk, magnetooptical disk, magnetic tape, and other computer-readable medium for recording program.

Thus, the present invention should be understood sufficiently to include various embodiments not described herein. Therefore, the invention should be limited only by the specific matters relating to the claims evident and reasonable from the disclosure herein.

Finally, results of experiments for evaluating the leak current by using the electric characteristic methods of the prior art and the invention are unveiled below.

### (Experiment 1)

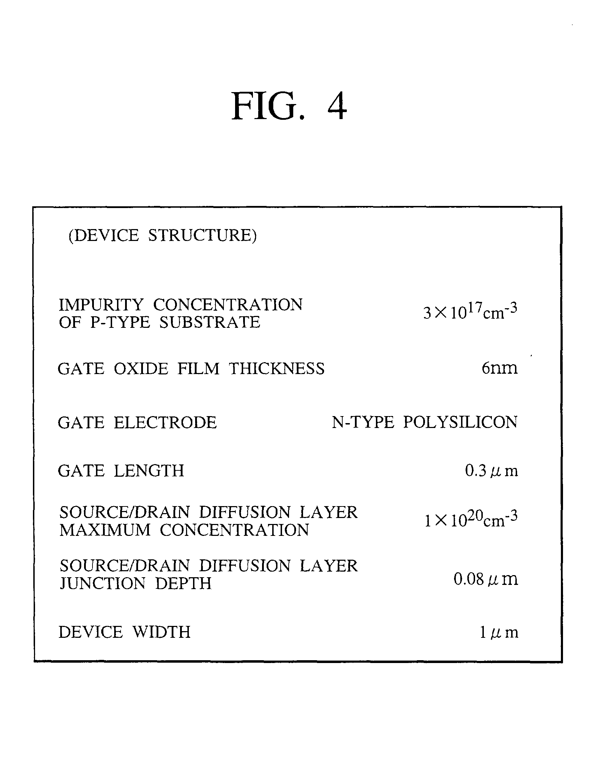

Experiment 1 was conducted on the silicon N type MOSFET having a device structure as shown in Fig. 4.

As the carrier generation and extinction mechanism, the SRH process, impact ionization, and inter-band tunneling were assumed, and as the bias condition, 0 [V] was applied to the source electrode and substrate electrode, 1 [V] to the gate electrode, and 2 [V] to the drain electrode.

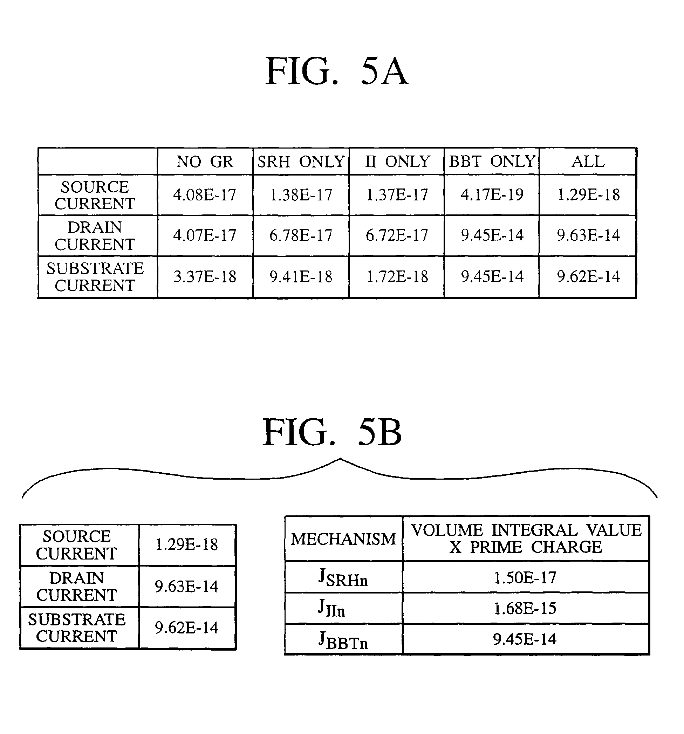

First of all, results of evaluation by employing the prior art are shown in Fig. 5A.

As known from Fig. 5A, in the case of this semiconductor device, in the set bias condition, the inter-band tunneling occupies the majority of leak current, and the leak current due to inter-band tunneling is known to be 9.45 x 10-14 A. The reason why the current value is slightly different between "BBT only" and "all" is that impact ionization is induced by leak current due to inter-band tunneling in the case of "all", but such effect is ignored in the case of "BBT only". On the other hand, in the case of "II only", there is no leak current due to inter-band tunneling inducing impact ionization, and hence the calculation result of leak current is also different from the case of "all". Also due to the difference between the current of "all" and "BBT only", it is estimated that leak current of about 1.7 x 10-15 A is induced because impact ionization occurs due to leak current by inter-band tunneling.

On the other hand, in the case of evaluation by using the prior art, although the simulation of "no GR" can be omitted, it is necessary to execute simulation four times, that is, "SRH only", "II only", "BBT only" ,and "all", and the leak current due to impact ionization caused by leak current due to inter-band tunneling can be estimated only from plural calculation results.

Results of evaluation by using the electric characteristic evaluation of the invention are shown at the left side in Fig. 5B.

As known from the left side in Fig. 5B, it is known that the current value itself is exactly same as in the case of "all" in the prior art.

The right side of Fig. 5B shows the product of the volume integral value in the silicon substrate of the electron generation and extinction speed specific to the invention multiplied by prime charge q.

As known from the right side in Fig. 5B, although the leak current component due to SRH process is small, the leak current due to impact ionization is 1.68 x 10-15 A and the leak current due to inter-band tunneling is 9.45 x 10-14 A. This result nearly coincides with the result obtained by four times of execution of device simulation in the prior art.

That is, according to the electric characteristic evaluating method of the present invention, only by simulating once, the contribution of each generation and extinction mechanism to the leak current can be evaluated at high precision. The time required for volume integration of each carrier generation and extinction speed is as short as ignorable in comparison with the entire processing time, and the evaluation by the conventional devices simulation requiring four times of simulation can be realized by one execution according to the electric characteristic evaluating method of the invention, and hence the time required for evaluation is 1/4, and the efficiency of evaluation of leak current is significantly improved.

### (Experiment 2)

In experiment 2, using the silicon N type MOSFET having the same device structure as in experiment 1, the leak current was extracted in different bias condition, that is, 0 [V] was applied to the source electrode and substrate electrode, 2 [V] to the gate electrode, and 2 [V] to the drain electrode.

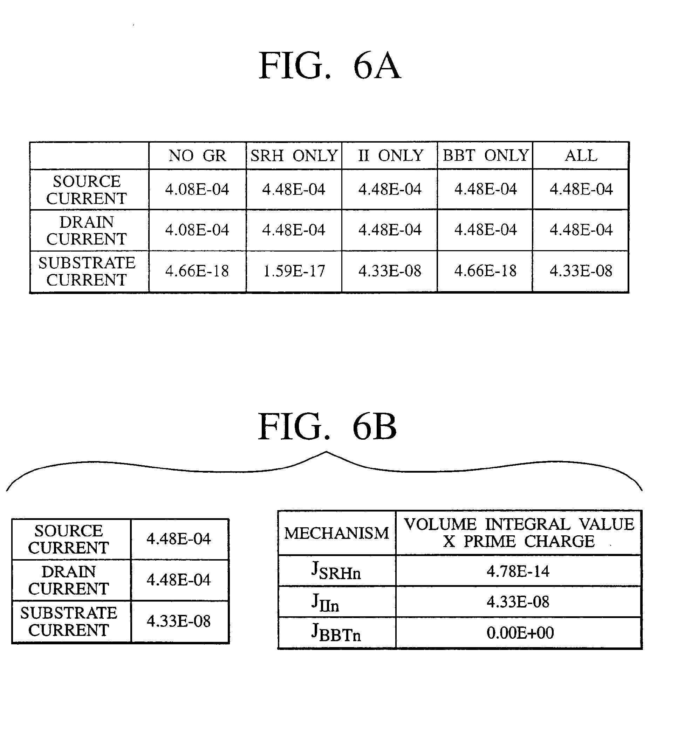

Evaluation results by the prior art are shown in Fig. 6A.

As clear from Fig. 6A, in the case of this device, according to this bias condition, the impact ionization occupies almost all leak current, and there is practically no leak current due to SRH process or inter-band tunneling. Thus, by employing the conventional device simulation, although the simulation of "no GR" can be omitted, it is necessary to execute simulation four times, that is, "SRH only", "II only", "BBT only" , and "all".

Results of calculation of current value by using the electric characteristic evaluating method of the invention are shown at the left side in Fig. 6B.

The current value itself is same as in the case of "all" in the case of using the conventional device simulation.

The right side of Fig. 6B shows the product of the volume integral value in the silicon substrate of the electron generation and extinction speed specific to the invention multiplied by prime charge q.

As known from the right side in Fig. 6B, although the leak current component due to SRH process and inter-band tunneling is as small as ignorable, the leak current due to impact ionization is 4.33 x 10-8 A. This result nearly coincides with the result obtained by four times of execution of device simulation in the prior art. That is, according to the electric characteristic evaluating method of the invention, only by simulating once, the contribution of each generation and extinction mechanism to the leak current can be evaluated.

### OTHER EMBODIENTS

Various modifications will become possible for those skilled in the art after receiving the teachings of the present disclosure without depending from the scope thereof.

## Claims

1. An electric characteristic evaluating apparatus for extracting electric characteristics of a semiconductor device by numerically solving physical equations describing physical phenomenon in a semiconductor device comprising:
an integral value calculator configured to integrate a carrier generation and extinction speed obtained by numerically solving the physical equations, in each carrier generation and extinction mechanism within a semiconductor region, and issue the result obtained by integration respectively.

2. The electric characteristic evaluating apparatus according to claim 1, wherein the volume integration is effected on the carrier generation and extinction mechanism having the dimension of length⁻³ time⁻¹, the surface integration is effected on the carrier generation and extinction mechanism having the dimension of length⁻² time⁻¹, and the line integration is effected on the carrier generation and extinction mechanism having the dimension of length⁻¹ time⁻¹.

3. The electric characteristic evaluating apparatus according to claim 1, wherein the carrier generation and extinction mechanism includes a SRH process, impact ionization, and inter-band tunneling.

4. The electric characteristic evaluating apparatus according to claim 1, wherein said integral value calculator issues an output by multiplying a charge amount to each integral value of each carrier generation and extinction mechanism.

5. The electric characteristic evaluating apparatus according to claim 1, wherein the electric characteristics are extracted repeatedly varying a bias condition to the semiconductor device.

6. An electric characteristic evaluating method for extracting electric characteristics of a semiconductor device by numerically solving physical equations describing physical phenomenon in a semiconductor device comprising the steps of:
integrating a carrier generation and extinction speed obtained by numerically solving the physical equations, in each carrier generation and extinction mechanism within a semiconductor region; and
issuing the result obtained by integration respectively.

7. The electric characteristic evaluating method according to claim 6, wherein the volume integration is effected on the carrier generation and extinction mechanism having the dimension of length⁻³ time⁻¹, the surface integration is effected on the carrier generation and extinction mechanism having the dimension of length⁻² time⁻¹, and the line integration is effected on the carrier generation and extinction mechanism having the dimension of length⁻¹ time⁻¹.

8. The electric characteristic evaluating method according to claim 6, wherein the carrier generation and extinction mechanism includes a SRH process, impact ionization, and inter-band tunneling.

9. The electric characteristic evaluating method according to claim 6, wherein an output is issued by multiplying a charge amount to each integral value of each carrier generation and extinction mechanism.

10. The electric characteristic evaluating method according to claim 6, wherein the electric characteristics are extracted repeatedly varying a bias condition to the semiconductor device.

11. An electric characteristic evaluating program for extracting electric characteristics of a semiconductor device by numerically solving physical equations describing physical phenomenon in a semiconductor device comprising and making a computer system execute the process of:
an integral value calculating process of integrating a carrier generation and extinction speed obtained by numerically solving the physical equations, in each carrier generation and extinction mechanism within a semiconductor region, and issuing the result obtained by integration respectively.

12. The electric characteristic evaluating program according to claim 11, wherein the volume integration is effected on the carrier generation and extinction mechanism having the dimension of length⁻³ time⁻¹, the surface integration is effected on the carrier generation and extinction mechanism having the dimension of length⁻² time⁻¹, and the line integration is effected on the carrier generation and extinction mechanism having the dimension of length⁻¹ time⁻¹.

13. The electric characteristic evaluating program according to claim 11, wherein the carrier generation and extinction mechanism includes a SRH process, impact ionization, and inter-band tunneling.

14. The electric characteristic evaluating program according to claim 11, wherein an output is issued by multiplying a charge amount to each integral value of each carrier generation and extinction mechanism.

15. The electric characteristic evaluating program according to claim 11, wherein the electric characteristics are extracted repeatedly varying the bias condition to the semiconductor device.

16. A semiconductor device manufacturing method for extracting electric characteristics of a semiconductor device by numerically solving physical equations describing physical phenomenon in a semiconductor device, determining the manufacturing condition of semiconductor device from the extracted electric characteristics, and manufacturing the semiconductor device on the basis of the determined manufacturing condition comprising the steps of:
integrating a carrier generation and extinction speed obtained by numerically solving the physical equations, in each carrier generation and extinction mechanism within a semiconductor region, and issuing the result obtained by integration respectively; and
determining the manufacturing condition of the semiconductor device having the desired electric characteristics on the basis of the result obtained by integration.

17. The semiconductor device manufacturing method according to claim 16, wherein the volume integration is effected on the carrier generation and extinction mechanism having the dimension of length⁻³ time⁻¹, the surface integration is effected on the carrier generation and extinction mechanism having the dimension of length⁻² time⁻¹, and the line integration is effected on the carrier generation and extinction mechanism having the dimension of length⁻¹ time⁻¹.

18. The semiconductor device manufacturing method according to claim 16, wherein the carrier generation and extinction mechanism includes a SRH process, impact ionization, and inter-band tunneling.

19. The semiconductor device manufacturing method according to claim 16, wherein an output is issued by multiplying a charge amount to each integral value of each carrier generation and extinction mechanism.

20. The semiconductor device manufacturing method according to claim 16, wherein the electric characteristics are extracted repeatedly varying a bias condition to the semiconductor device.
